# EUROPÄISCHE PATENTSCHRIFT

(11) **EP 3 215 474 B1**
(45) Veröffentlichungstag und Bekanntmachung des Hinweises auf die Patenterteilung: **05.03.2025**
(21) Anmeldenummer: 15788414.9
(22) Anmeldetag: 03.11.2015
(51) Int. Cl.: C04B 18/02, C04B 40/00

(54) **VERFAHREN ZUR HERSTELLUNG VON GRANULATEN AUS ZEMENTZUSAMMENSETZUNGEN**
METHOD FOR THE PRODUCTION OF GRANULES FROM CEMENT COMPOSITIONS
PROCÉDÉ DE FABRICATION DE GRANULATS À PARTIR DE COMPOSITIONS DE CIMENT

(30) Priorität: 07.11.2014 EP 14192297
(43) Veröffentlichungstag der Anmeldung: 13.09.2017
(73) Patentinhaber: Sika Technology AG, 6340 Baar (CH)
(72) Erfinder: KURZ, Christoph, CH-5304 Endingen (CH); BÜRGE, Christian, CH-5503 Schafisheim (CH); WOMBACHER, Franz, CH-8916 Jonen (CH)
(74) Vertreter: Sika Patent Attorneys
(86) Internationale Anmeldenummer: PCT/EP2015/075504
(87) Internationale Veröffentlichungsnummer: WO 2016/071298

(56) Entgegenhaltungen:
- EP-A1- 2 261 188
- WO-A1-2012/084716
- WO-A1-98/54108
- CN-A- 101 987 785
- CN-A- 102 126 843
- DE-A1- 19 518 469
- FR-A1- 2 476 067
- JP-A- 2004 276 575
- JP-A- 2009 126 761
- JP-A- H08 333 143
- JP-A- H10 296 207
- US-A- 4 391 644
- US-A1- 2011 046 270

## Beschreibung

Die vorliegende Erfindung betrifft ein Verfahren zum Herstellen von Aggregaten und Granulaten aus nichtabgebundenen Zementzusammensetzungen. Insbesondere kann die vorliegende Erfindung zur Verarbeitung von nicht abgebundenem Restzement eingesetzt werden, der nach der Erfüllung eines Arbeitsauftrags anfallen kann. Allgemeiner betrifft die vorliegende Erfindung Zementmischungen, die nicht wie beabsichtigt verwendet wurden und daher recycelt werden müssen.

### Stand der Technik

Heutzutage kann 1% des hergestellten Betons nicht so verwendet werden, wie dies ursprünglich vorgesehen war. So kann beispielsweise infolge von Fehlkalkulationen die Liefermenge den Bedarf übersteigen, es kann sein, dass ein gewisser Überschuss als Reserve eingeplant wurde oder es kann beim Abmischen des Betons zu Fehlern gekommen sein, so dass der hergestellte Beton nicht für die vorgesehene Verwendung einsetzbar ist. Solcher Beton wird normalerweise an das Betonwerk zurückgeliefert und kann dort unterschiedlich weiterverwendet oder aufgearbeitet werden. So können beispielsweise Standardelemente hergestellt werden oder der kann Beton ausgebreitet, nach der Aushärtung wieder aufgemahlen und dann wiederverwendet werden. Zudem ist es möglich, den Beton mit Wasser zu waschen, wobei die nicht reaktiven Bestandteile wie Sand vom Zementleim abgetrennt werden. Diese Bestandteile können anschließend für die Herstellung von neuem Beton wiederverwendet werden. Die resultierende Schlacke mit den restlichen Feinanteilen kann ebenfalls dem neuen Beton als Zugabewasser wieder zugeführt werden.

Vor einigen Jahren wurde zudem vorgeschlagen, nicht benötigten Beton durch Granulierung wiederzuverwenden. Hierzu werden dem Beton Additive zugegeben, welche den Beton in ein Granulat umwandeln, das nach vollständiger Aushärtung (nach etwa 24 Stunden) als Zusatzstoff für Frischbeton wiederverwendet werden kann.

Die oben erwähnten bereits existierenden Betonrecyclingverfahren weisen jedoch verschiedene Nachteile auf, die im Folgenden eingehender erläutert werden sollen. So ist beispielsweise bei der Herstellung von Standardbetonelementen nicht immer ein Bedarf an solchen Elementen gegeben. In vielen Fällen ist die Nachfrage nach solchen Elementen wesentlich kleiner als das Angebot, so dass eine derartige Weiterverwendung aus ökonomischer Sicht relativ unattraktiv ist. Das Aufmahlen von ausgehärtetem Beton erfordert es, dass eine gegossene Betonstruktur aufgebrochen wird, und die enthaltenen Zuschläge durch Sieben nach Größe entfernt werden, so dass der Prozess insgesamt relativ aufwändig ist. Zudem erfordert ein Aufbrechen und Mahlen von Beton relativ viel Energie bei gleichzeitig entstehenden relativ hohen Staub- und Lärmemissionen. All dies macht eine derartige Aufarbeitung von Beton aus ökonomischer Sicht relativ unattraktiv.

Bei einem Auswaschen des Betons, wie es beispielsweise in der DE 39 06 645 beschrieben ist, werden Sand und Kies-Bestandteile durch Zusatz von Wasser ausgewaschen, und von den restlichen Zement-Feinsedimenten getrennt. Die verdünnte überstehende Zementsuspension wird in einem separaten Sedimentationstank gesammelt. Die abgetrennten Sand- und Kiesbestandteile können direkt weiterverwendet werden. Der Zement kann sich im Sedimentationstank aus der verdünnten Zementsuspension absetzen und das klare überstehende Wasser kann dann teilweise ebenfalls wiederverwendet werden.

Während das in der DE 39 06 645 beschriebene Verfahren ein Recycling von Kies- und Sandbestandteilen erlaubt, weist es den Nachteil auf, dass die Entstehung von Abfällen in Form von Zement nicht vollständig vermieden wird. Zudem sind für das Waschen des Restbetons relativ große Mengen von Wasser erforderlich, so dass insgesamt relativ große Mengen an verschmutztem Wasser anfallen. Nur ein geringer Teil dieses Waschwassers kann für die Herstellung von Beton wiederverwendet werden, weil dieses Wasser größere Mengen an gelösten Salzen und suspendierten Feststoffen enthält, die die Hydratation des Zements beeinträchtigen und damit negative Auswirkungen auf die mechanische Festigkeit des Betons haben. Daher ist es auch nicht möglich, das aus diesem Recycling-Prozess zurückgewonnene Wasser für die Herstellung von hochwertigem Beton, insbesondere von hochfestem Beton oder Luftporenbeton, einzusetzen. Überschüssiges Wasser, das nicht für die Herstellung von neuem Beton verwendet werden kann, muss entsorgt und neutralisiert werden, was zusätzliche Kosten verursacht.

Die DE 195 18 469 beschreibt ein Verfahren zur Wiederverwendung von Restbeton, das
a) die Zugabe einer auf die Zementmenge genau abgestimmten Menge eines Abbindeverzögerers für den Zement, der auf einem Phosphonsäurederivat basiert, sowie
b) die Zugabe von frischem Zement in einem Mischerfahrzeug zum Ende der gewünschten Verzögerungszeit, so dass das Verhältnis von Zement in der frischen zur alten Betonfraktion mindestens 2:1 beträgt, beinhaltet.

Dieses Verfahren erlaubt es, den Restbeton in einem ungehärteten Zustand im Mischerfahrzeug beispielsweise über Nacht oder über das Wochenende ausreichend flüssig zu halten und es danach in Kombination mit neuem Beton wiederzuverwenden, so dass die Entstehung von Abfall vermieden wird. Dieses Verfahren weist jedoch den Nachteil auf, dass es relativ kompliziert durchzuführen ist. So ist es beispielsweise erforderlich, dass die genaue Zusammensetzung des Restbetons, seine Menge, seine Verarbeitbarkeit, die Temperatur und die Zeit nach dem Mischen bekannt ist, um anhand dieser Parameter die genaue Menge an Abbindeverzögerer zu ermitteln, die erforderlich ist, um das Abbinden für den gewünschten Zeitraum zu verzögern. Zudem muss die Zugabe des frischen Betons und das Verhältnis zum Restbeton genau austariert sein und kontrolliert werden, um zu vermeiden, dass der entstehende neue Beton zu langsam aushärtet. Aus diesen Gründen ist das in der DE 195 18 469 beschriebene Verfahren in der praktischen Anwendung nur schwer zu implementieren.

Die JP 2004/276575 beschreibt ein Verfahren, bei dem der überschüssige Beton mit Additiven behandelt wird, die die Härtung des Betons verhindern, es aber erlauben, dass der Restbeton koaguliert. Der koagulierte Beton wird dann getrocknet und unter Ausbildung von schwachen Bindungskräften verfestigt, so dass er durch Vorrichtungen zerkleinert werden kann. Die so entstandenen Aggregate können dann von dem schwach hydratisierten Zementpulver abgetrennt und recycelt werden. Dieses System erlaubt demzufolge die Rückgewinnung des Aggregats, ohne dass große Mengen an Abfallwasser entstehen. Das Verfahren hat aber andererseits den Nachteil, dass das die Härtung inhibierende Material vollständig von den zurückgewonnenen Aggregaten abgetrennt werden muss, damit, wenn das recycelte Aggregat für die Herstellung neuen Zements verwendet wird, dort eine Verzögerung der Hydratation des Zements vermieden wird. Zudem entstehen auch bei diesem Verfahren Abfälle, weil die Pulverfraktionen, die von den Aggregaten abgetrennt werden, nicht wiederverwendet werden können und entsorgt werden müssen. Schließlich ist es erforderlich, den Restzement etwa eine Woche ruhen zu lassen, bevor er vollständig trocken ist. Für diesen langen Zeitraum müssen große Flächen zur Verfügung stehen, auf denen das Material trocknen kann. Diese Nachteile machen auch dieses Verfahren aus wirtschaftlichen Gesichts-punkten relativ unattraktiv.

Das japanische Gebrauchsmuster 3147832 beschreibt ein Material zur Behandlung von Restbeton, das die Wiederverwertung von überschüssigem Beton erlaubt, ohne dass große Flächen oder lange Zeiträume für eine Aushärtung des Betons erforderlich sind. Das Material umfasst ein Superabsorberpolymer in Pulver- oder Granulatform, das in einem durch ein wasserlösliches Papier gebildeten Behältnis enthalten ist. Wenn dieses Material einem den Restbeton enthaltenden Mischer zugegeben wird, löst sich die Umhüllung in Form des wasserlöslichen Papiers auf, so dass das Superabsorberpolymer mit dem Beton in Kontakt treten kann. Nach 5 bis 10 Minuten Mischens absorbiert das Superabsorberpolymer einen Teil des Wassers im Restbeton; es bildet sich ein Gel, das den Zement und andere feine Partikel umschließt. Das so erhaltene Produkt ist ein granulares Material, das aus dem Mischer abgelassen werden kann. Der Zeitraum, der für eine Härtung des granularen Materials erforderlich ist, ist im Vergleich zur JP 2004-276575 deutlich verkürzt. Zudem entstehen bei diesem Verfahren keine wesentlichen Abfälle, weil die Zementpartikel und die weiteren feinen Partikel in einem Gelnetzwerk eingelagert werden, das die Aggregate umhüllt. So kann das gesamte Betonmaterial in ein granulares Material umgewandelt werden und beispielsweise als Füllung für Straßenbetten recycelt werden.

Während das in der JP 3147832 beschriebene Verfahren im Vergleich zu den vorbeschriebenen Verfahren wesentliche Vorteile aufweist, hat auch dieses Verfahren Nachteile. So absorbiert zwar das Superabsorberpolymer direkt nach der Zugabe einen wesentlichen Anteil des freien Wassers, dieses Wasser wird jedoch teilweise im Laufe der Zeit aus dem Superabsorbergel freigesetzt, so dass das granulare Material wieder nass und klebrig werden kann und zu einer Reagglomeration neigt. Wenn das Material nicht für längere Zeit im Mischer gemischt wird, bildet sich zudem kein granulares Material und die Betonmasse kann lange steife Blöcke bilden, deren Entsorgung zu wesentlich erhöhten Kosten führt. Diese Nachteile kommen vor allem bei selbstkompaktierendem Beton zum Tragen, weil dieser Additive aus feinen Mineralien enthält. Das hat zur Folge, dass relativ große Mengen an Superabsorberpolymer erforderlich sind, um die im Beton enthaltenen feinen Pulver zu aufzunehmen. Ein weiterer Nachteil besteht darin, dass dieses Verfahren bei Beton, der zur Verzögerung des Abbindens einen Überschuss an Wasser enthält, nicht sinnvoll eingesetzt werden kann, da relativ große Mengen an Superabsorberpolymeren erforderlich sind. Dies führt zur Bildung eines relativ viskosen und klebrigen Gels, was eine Agglomeration der Betonmischung zur Folge haben kann.

Die JP 2009-126761 beschreibt die Verwendung eines Flockungsmittels in Form eines Superabsorbers als Additiv für Restbeton, was aber die gleichen Nachteilen aufweist, die bereits für die JP 3147832 erläutert wurden.

In der WO 2012/084716 A1 ist schließlich ein Verfahren zur Herstellung eines Granulats aus Restbeton beschrieben, bei dem einer Zementzusammensetzung ein Blitzabbinder und ein Superabsorberpolymer zu zugesetzt wird, so dass sich infolge des Abbindens mit dem Blitzabbinder ein Granulat bildet. Als Blitzabbinder werden in der WO 2012/084716 insbesondere Calciumaluminathydrate der allgemeinen Struktur (CaO.Al₂O₃) vorgeschlagen.

Auch das in der WO 2012/084716 beschriebene Verfahren weist jedoch den Nachteil auf, dass die einzelnen Granulatpartikel nach der Aushärtung des hergestellten Granulats infolge des Abbindens mit dem Blitzabbinder miteinander verkleben können und deshalb vor einer Weiterverwendung mechanisch voneinander getrennt werden müssen. Die Ursache dafür besteht darin, dass als Blitzabbinder Aluminiumsalze zum Einsatz kommen. Unter den Bedingungen des Abbindens kann sich aus diesen Ettringit bilden, welches zu einer Haftung der Granulatkörper untereinander führt. Durch das teilweise verkleben ist eine Dosierung der Granulataggregate schwieriger als bei einem Granulat, bei dem die einzelnen Granulatpartikel nicht miteinander verkleben.

Vor diesem Hintergrund besteht ein Bedarf nach einem Verfahren zum Recycling von nicht mehr benötigten Beton, das als Endprodukt ein Granulat liefert, bei dem die einzelnen Granulatpartikel nicht miteinander verkleben und somit relativ leicht dosiert werden können, ohne dass eine vorherige mechanische Trennung der Granulatpartikel erforderlich ist. Die vorliegende Erfindung befasst sich mit diesem Problem.

### Detaillierte Beschreibung der Erfindung

Die vorliegende Erfindung betrifft demzufolge ein Verfahren gemäß Anspruch 1, wobei zum Herstellen von Aggregaten aus nichtabgebundenen Zementzusammensetzungen, insbesondere aus nichtabgebundenem Beton oder Restbeton, das die Zugabe
a) eines wasserabsorbierenden Mittels und
b) eines Kristallisationsinaktivierers zu einer nicht abgebundenen Zementzusammensetzung sowie das Mischen, bis sich ein granulares Material gebildet hat, umfasst.

Überraschend wurde in diesem Zusammenhang gefunden, dass frischer Beton durch den Zusatz eines wasserabsorbierenden Mittels und eines Kristallisationsinaktivierers beispielsweise in einem Betonmischfahrzeug oder einer ähnlichen Mischvorrichtung in synergistischer Weise in ein granulares Material umgewandelt werden kann, so dass die Nachteile der Verfahrens aus dem Stand der Technik vermieden werden. Insbesondere wird durch die spezielle Kombination aus dem wasserabsorbierenden Mittel und dem Kristallisationsinaktivierer ein granulares Material gebildet, dessen einzelne Granulatpartikel nach der vollständigen Aushärtung nicht miteinander verkleben, so dass beispielsweise im Vergleich zur WO 2012/084716 vor einer Weiterverwendung des Granulat keine mechanische Trennung von Granulataggregaten erforderlich ist. Darüber hinaus wurde gefunden, dass sich durch den Zusatz des wasserarbsorbierenden Mittels und des Kristallisationsinaktivierers die mechanischen Eigenschaften des resultierenden granularen Materials gegenüber den Zementzusammensetzungen, die ohne diese Zusatzstoffe gehärtet werden, nicht wesentlich verschlechtern, so dass das Material im Vergleich zu bekannten Beton-Recyclingprodukten signifikante Vorteile aufweist. Die gemäß dem erfindungsgemäßen Verfahren hergestellten granularen Materialien zeichnen sich damit durch besonders günstige Eigenschaften aus und können in vielen Anwendungsbereichen, beispielsweise im Straßenbau oder zur Herstellung von Möbeln, Leichtbeton oder dekorativen Anwendungen eingesetzt werden.

Bei dem wasserabsorbierenden Mittel gemäß dem erfindungsgemäßen Verfahren handelt es sich insbesondere um ein wasserabsorbierendes Mittel in Form eines Superabsorberpolymers oder in Form eines Schichtsilikats, wobei Schichtsilikate in Form von Vermiculit besonders bevorzugt sind.

Mit dem Begriff "Superabsorberpolymere" sind Polymere gemeint, die große Mengen an Wasser aufnehmen können. Wenn Superabsorberpolymere mit Wasser in Kontakt kommen, diffundieren die Wassermoleküle in die Hohlräume des Polymernetzwerks und hydratisieren die Polymerketten. Das Polymer kann so quellen und ein Polymergel bilden oder sich langsam auflösen. Dieser Schritt ist reversibel, so dass die Superabsorberpolymere in ihren festen Zustand regeneriert werden können, indem das Wasser entfernt wird. Die Eigenschaft der Wasserabsorption wird durch das Quellverhältnis bezeichnet, mit dem das Verhältnis des Gewichts eines gequollenen Superabsorberpolymers zu seinem Gewicht im getrockneten Zustand gemeint ist. Das Quellverhältnis wird durch den Grad der Verzweigung des Superabsorberpolymers, eine gegebenenfalls vorhandene Vernetzung, die chemische Struktur der Monomere, die das superabsorbierende Polymernetzwerk bilden, und externe Faktoren, wie den pH-Wert, die Ionenkonzentration der Lösung und die Temperatur beeinflusst. Wegen ihrer Eigenschaft, mit Wasser zu interagieren, werden Superabsorberpolymere auch als Hydrogele bezeichnet.

Beispiele von im Rahmen der vorliegenden Erfindung verwendbaren Superabsorberpolymeren umfassen u.a. natürliche Polymere, wie Cellulose, Chitosan oder Collagen, synthetische Polymere, wie Poly(hydroxyethylmethacrylat), Poly(ethylenglycol) oder Poly(ethylenoxid) oder ionische synthetische Polymere, wie Polyacrylsäure (PAA), Polymethacrylsäure (PMAA), Polyacrylamide (PAM) oder Polymilchsäure (PLA).

Superabsorberpolymere, die aus ionischen Monomeren hergestellt werden, absorbieren normalerweise mehr Wasser als solche, die aus neutralen Monomeren hergestellt werden, was in der elektrostatischen Abstoßung zwischen den einzelnen Polymerketten begründet ist. Das Maß der Vernetzung korrespondiert zur Zahl der chemischen Verbindungen. Je höher der Grad der Vernetzung ist und je höher der Anteil der Vernetzungsmittel, desto kürzer ist der Abstand zwischen zwei Vernetzungsstellen, was zu einer Reduktion des Quellgrades führt. Der Grad des Quellens hängt aber auch von externen Faktoren wie dem pH-Wert und der Temperatur ab. Superabsorberpolymere, die aus sauren Monomeren wie Acrylsäure oder Methacrylsäure gebildet werden, können bei pH-Werten oberhalb von 7 deprotoniert werden, so dass in den Polymerketten negative Ladungen erzeugt werden. Die damit verbundene elektrostatische Abstoßung führt zu einem höheren Grad an Quellung in alkalischen Medien. Superabsorberpolymere, die im Rahmen der vorliegenden Erfindung besonders geeignet sind, sind ionische Superabsorberpolymere, insbesondere solche, die auf Polyacrylamid, modifiziert mit Acrylsäure, basieren und sowohl von linearer als auch vernetzter Struktur sein können.

Eine zweite Klasse von wasserabsorbierenden Mittel, die mit besonderen Vorteilen im Rahmen des erfindungsgemäßen Verfahrens eingesetzt werden kann, sind Schichtsilikate, insbesondere in Form von Vermiculit. Der Begriff "Vermiculit" bezeichnet ein Schichtsilikat, das im monoklinen Kristallsystem mit der allgemeinen chemischen Zusammensetzung Mg_{0.7}(Mg, Fe, Al)₆(SiAl)₈O₂₀(OH)₄ · 8 H₂O vorliegt. Vermiculit entwickelt blättrige, schuppige oder massige Aggregate, die entweder farblos oder durch Fremdbeimengungen grauweiß, gelbbraun, graugrün bzw. grün eingefärbt sind.

Die Menge des wasserabsorbierenden Mittels, die im erfindungsgemäßen Verfahren zu besonders günstigen Ergebnissen führt, hängt im Wesentlichen von der Absorptionsfähigkeit des verwendeten Materials für Wasser ab. So weisen Superabsorberpolymere in der Regel eine größere Wasserabsorption auf als Schichtsilikate, so dass eine geringe Menge eines Superabsorberpolymers ausreichend ist, um einen mit einer bestimmten Menge an Schichtsilikat vergleichbaren Effekt zu erzielen. Das Superabsorberpolymer kann im Rahmen des erfindungsgemäßen Verfahrens zweckmäßig in einer Menge von 0,04 bis 2 Gew.-%, bevorzugt 0,08 bis 1 Gew.-%, und am meisten bevorzugt 0,1 bis 0,5 Gew.-%, bezogen auf das Gesamtgewicht der Zementzusammensetzung, zugegeben werden. Bei Schichtsilikaten sind hingegen Mengen im Bereich von 2 bis 30 Gew.-%, bevorzugt im Bereich von 4 bis 15 Gew.-%, und am meisten bevorzugt im Bereich von 6 bis 10 Gew.-% sinnvoll.

In den der vorliegenden Erfindung zugrundeliegenden Untersuchungen konnte gezeigt werden, dass der Zusatz von Vermiculit-Pulver oder eines Superabsorberpolymers ohne den Zusatz eines Kristallisationsinaktivierers nach vollständiger Aushärtung der Materialien zu einer ungünstigen Kompaktheit des erhaltenen Granulats führt. Im Gegensatz dazu wurden deutlich günstigere Kompaktheiten erzielt, wenn der Mischung auch ein Kristallisationsinaktivierer zugegeben wurde.

Als Kristallisationsinaktivierer haben sich erfindungsgemäß in diesem Zusammenhang Carbonsäuren mit einer Molmasse pro Säuregruppe von < 100 g/mol oder α-Hydroxycarbonsäuren als zweckmäßig herausgestellt. Besonders geeignete und damit im Rahmen des Verfahrens der vorliegenden Erfindung besonders bevorzugte α-Hydroxycarbonsäuren sind beispielsweise Milchsäure, Zitronensäure oder Äpfelsäure. Besonders geeignete Carbonsäuren mit einer Molmasse pro Säuregruppe von < 100 g/mol sind beispielsweise Oxalsäure, Ameisensäure oder Essigsäure.

Die Menge des Kristallisationsinaktivierers hängt maßgeblich vom Bindemittelgehalt der Zementzusammensetzung ab. Als besonders geeignet haben sich dabei Mengen von 1 bis 15 Gew.-%, bevorzugt 2 bis 10 Gew.-%, und am meisten bevorzugt etwa 3 bis 8 Gew.-% Kristallisationsinaktivierer, bezogen auf den Bindemittelgehalt in der Zementzusammensetzung, herausgestellt. Es wurde zudem beobachtet, dass bei Hydroxycarbonsäuren eine geringfügig höhere Menge an Kristallisationsinaktivierer erforderlich ist, der bevorzugt im Bereich von 2 bis 10 und insbesondere 3 bis 8 Gew.-% liegt. Bei Carbonsäuren und insbesondere bei Dicarbonsäuren, wie Oxalsäure, ist hingegen ein etwas geringerer Anteil ausreichend. Hier haben sich Mengen im Bereich von 1 bis 10 Gew.-% und insbesondere 2 bis 7 Gew.-% als besonders geeignet erwiesen.

Aus dem vorstehend im Zusammenhang mit der WO 2012/084716 erläuterten Gründen werden im erfindungsgemäßen Verfahren keine Calciumaluminathydrate, und besonders bevorzugt keine Aluminiumsalze zugesetzt, um so die Entstehung von Ettingit zu vermeiden.

Wenn die vorstehend bezeichneten Superabsorberpolymere oder Schichtsilikate zu nicht-abgebundenem Zement, insbesondere flüssigem Zement, zugegeben werden, entziehen sie dem Zement das Wasser, wobei ein Großteil des in der Zementzusammensetzung enthaltenen Wassers in die Superabsorberstruktur oder in die Schichtsilikatstruktur aufgenommen wird. Diese Reaktion führt selbst dann, wenn überschüssiges Wasser vorhanden ist zum Trocknen des Restbetons und zu einer starken Verminderung der Verarbeitbarkeit. Durch die Rotation eines Betonmischerfahrzeugmischers oder einer anderen Mischvorrichtung bildet sich ein granulares Material.

Die Mischzeit hängt von der Art des Betons und der Dosierung der Additive ab. Typischerweise sind für eine Umwandlung von frischem Beton in ein Granulat etwa 5 bis 10 Minuten Mischzeit ausreichend, es können aber auch längere Mischzeiten angewendet werden. Daher ist es im Rahmen des erfindungsgemäßen Verfahrens möglich, das wasserabsorbierende Mittel und den Kristallisationsinaktivierer einem Betonmischfahrzeugmischer bereits auf der Baustelle zuzugeben und während der Rückfahrt zum Betonmischwerk ein granulares Material produzieren. Das im Betonmischfahrzeug erzeugte granulare Material kann dann ohne Zeitverlust nach der Ankunft am Betonmischwerk entleert werden, was zu einer signifikanten Erhöhung der Produktivität führt.

Die granularen Materialien gemäß der vorliegenden Erfindung können auf relativ kleinem Raum gelagert werden und härten in kurzer Zeit vollständig aus. Beispielsweise sind granulare Materialien, die am Ende eines Arbeitstages übrigbleiben, nach etwa 12 bis 24 Stunden so weit ausgehärtet, dass sie eine ausreichende mechanische Festigkeit aufweisen, damit sie durch einen Bagger in einen Lagerbereich transportiert werden können.

Es ist möglich, das wasserabsorbierende Mittel und den Kristallisationsinaktivierer getrennt voneinander oder als Mischung zur Zementzusammensetzung zuzugeben. Bevorzugt ist es im Rahmen der vorliegenden Erfindung jedoch, wenn der Zementzusammensetzung in einem ersten Schritt in einem Mischer ein wasserabsorbierendes Mittel zugegeben wird, das anschließend mit der Zementzusammensetzung vermischt wird, bis sich ein Granulat gebildet hat, und in einem zweiten Schritt ein Kristallisationsinaktivierer in die Mischung aus Zementzusammensetzung und wasserabsorbierendem Mittel zugegeben wird. Der Kristallisationsinaktivierer ist dann zweckmäßig ebenfalls mit der Mischung aus Zementzusammensetzung und dem wasserabsorbierenden Mittel zu vermischen. Durch das wasserabsorbierende Mittel im ersten Schritt wird dem Beton zunächst ein signifikanter Anteil des Wassers entzogen, was den Beton in ein klebriges, erdfeuchtes Granulat verwandelt. Um diesen Prozess zu begünstigen, kann beispielsweise die Mischtrommel eines Betonmischfahrzeugs während mehrerer Minuten intensiv gedreht werden, um eine homogene Verteilung des wasserabsorbierenden Mittels zu gewährleisten. Anschließend wird der Kristallisationsinaktivierer zugegeben und ebenfalls eingehend mit dem schon entstandenen Granulat aus der Zementzusammensetzung und dem wasserabsorbierenden Mittel vermischt.

Es ist möglich, der Zementzusammensetzung im Rahmen des erfindungsgemäßen Verfahrens zusätzliche weitere Bestandteile zuzugeben. So können beispielsweise für Zementzusammensetzungen übliche Additive zugesetzt werden, die aus der Gruppe, umfassend Zement, Mittel für die Beschleunigung des Abbindens von Zement, Mittel für die Aktivierung der Bildung von Aluminathydraten, Verzögerungsmittel, Wasser-abdichtende und Wasser-abweisende Mittel, Verwitterungsinhibitoren, Schlacken, natürliche Puzzolane, Mikrosilika, Flugasche, Quarzsand, Calciumcarbonat, Pimente und Farbmittel, Ton, poröse Glashohlkugeln, Kunststoff und Kautschukmaterialien, zugesetzt werden.

Mittel für die Beschleunigung des Abbindens von Zement beinhalten beispielsweise Calcium- und Natriumnitrat, Calcium- und Natriumchlorid, Triethanolamin, Natriumthiocyanat und Calciumsilikathydrate. Es können jedoch auch andere bekannte Mittel zur Beschleunigung der Hydratation von Zement im Rahmen des erfindungsgemäßen Verfahrens eingesetzt werden. Mittel für die Aktivierung der Bildung von Aluminiumnathydraten sind beispielsweise anorganische oder organische lösliche Calciumverbindungen, wie beispielsweise Calciumhydroxid, Calciumnitrat, Calciumacetat, Calciumformiat und Calciumthiocyanat. Beispiele von Abbindeverzögerern sind Natrium- und Calciumgluconate, Saccharose und andere Kohlenhydrate oder Kohlehydratderivate, sowie Citrate. Wasser-abdichtende und Wasser-abweisende Mittel beinhalten Organosilikonverbindungen, wie Silikone, Silane und Siloxane, kolloidales und Nano-Silika sowie Calciumstearat, es können jedoch auch andere Substanzen mit ähnlichen Effekten verwendet werden. Die vorstehend genannten Additive können mit dem wasserabsorbierenden Mittel oder dem Kristallisationsinaktivierer als ein einzelnes Produkt formuliert werden oder sie können der Zementzusammensetzung während des Mischens separat zugegeben werden. Substanzen mit einem hohen Gehalt an amorphem Silika, wie Mikrosilika, und andere natürliche oder synthetische Puzzolane können zugesetzt werden, um die Haltbarkeit des granularen Materials der vorliegenden Erfindung zu verbessern.

Um dem im Rahmen des erfindungsgemäßen Verfahrens erhaltenen Granulat neue Eigenschaften für andere wertvolle Anwendungen zu verleihen, insbesondere im Bereich des Straßenbaus und der Konstruktion von Gartenmöbeln, können Pigmente oder andere Farbmittel mit dem wasserabsorbierenden Mittel und dem Kristallisationsinaktivierer zugesetzt werden. Beispielsweise können Pigmente, die auf Eisen, Mangan, Zink oder Chromoxiden basieren, verwendet werden, um die granularen Materialien schwarz, braun, rot oder grün einzufärben. Andere Farben und Effekte können durch den Zusatz organischer Pigmente, die fluoreszierende Farbstoffe einschließen, erzeugt werden. Diese können in Form von Pulvern, Pasten, einer Lösung oder in dispergierter Form eingesetzt werden. Die entstehenden gefärbten Granulate können nach der vollständigen Aushärtung verwendet werden. Durch eine geeignete Auswahl des Typs und der Partikelgrößenverteilung der Granulate in der Zementmischung und weißem Zement können so granulare Materialien mit besonderem ästhetischem Wert hergestellt werden. Diese Materialien können weiter poliert und als Ersatz für natürliche Steine in beispielsweise Terrazzobodenbelägen eingesetzt werden.

Eine weitere Möglichkeit im Rahmen der vorliegenden Erfindung besteht in der Herstellung von leichten Aggregaten durch Zusatz von feinen Kunststoff- oder Gummimaterialien zu der frischen Zementmischung. Nachdem die Kunststoff- oder Gummimaterialien in den Beton oder die Betonmischungen eingearbeitet wurden, führt der Zusatz der Additive gemäß der vorliegenden Erfindung zu granularen Materialien, die die Kunststoff- und Kautschukpartikel vollständig einschließen. Derartige Aggregate zeichnen sich im Vergleich zu natürlichen Aggregaten durch ihre geringe Dichte aus und können besonders zweckmäßig für die Herstellung von Leichtbeton eingesetzt werden.

Die Herstellung von granularen Materialien gemäß der vorliegenden Erfindung und die Eigenschaften der resultierenden Produkte sowie deren Verwendung soll im Folgenden anhand einiger Beispiele näher illustriert werden.

### Beispiel 1

In einem Hobartmischer A200 wurde ein Basismörtel, bestehend aus einer Mischung von 750 g Normo 4 [Siggenthal/Holcim AG], Vigier CEM I 42.5N [Vigier Ciment AG] und CEM I 42.5N [Wildegg/ Jura cement] in einem Gewichtsverhältnis von 1:1:1 mit einer Feinheit nach Blaine gemäß EN 197-1 von 3'600 cm²/g, 141 g Kalksteinmehl, 738 g Sand mit einer Partikelgröße im Bereich von 0 bis 1 mm, 1107 g Sand mit einer Partikelgröße im Bereich von 1 bis 4 mm und 1154 g Sand mit einer Partikelgröße im Bereich von 4 bis 8 mm hergestellt. Dazu wurden die Sande, das Kalksteinmehl und der Zement für 1 Minute im Mischer gemischt, anschließend wurde das Anmachwasser, in dem das Fließmittel (0.4 oder 0.5 Gew.-%, bezogen auf Zement) gelöst oder dispergiert war, zugegeben, und weiter gemischt. Die Gesamtmischzeit nass dauerte jeweils etwa 3 Minuten. Der resultierende Basismörtel hatte durchgehend ein Ausbreitmass gemessen nach EN 1015-3 von 195-200 mm.

Dieser Basismörtel wurde mit einem wasserabsorbierenden Mittel versetzt und während 3 Minuten im Hobartmischer auf Mischstufe 2 vermischt. Anschließend wurde ein Kristallisationsinaktivierer zugegeben und ebenfalls für 3 Minuten auf Mischstufe 2 im Mischer gemischt. Die Zusammensetzungen der einzelnen Ansätze sind in der folgenden Tabelle 1 wiedergegeben. Die Proben 1 - 12 sind gemäss der vorliegenden Erfindung, die Proben V1 - V3 sind nicht erfindungsgemässe Vergleiche.

**Tabelle 1**

| Probe | Mischung | Dosierung rel. zu Bindemittel | Verhältnis Wasser/ Bindemittel | Wasser inkl. Mischung | Trocknungszustand | Rieselung | Reinigung | Kompaktheit nach 24 h |
|---|---|---|---|---|---|---|---|---|
| 1 | VC-20HE | 0,5 | 0,42 | 315 | Gut | Gut | Gut | Sehr gut |
| | SAP | 0,12 | | | | | | |
| | Milchsäure (80%) | 5,00 | | | | | | |
| 2 | VC-20HE | 0,50 | 0,42 | 315 | Gut | Gut | Gut | Sehr gut |
| | SAP | 0,12 | | | | | | |
| | Oxalsäure | 4,00 | | | | | | |
| 3 | VC-20HE | 0,50 | 0,42 | 315 | Gut | Gut | Gut | Sehr gut |
| | Vermiculit Pulver | 8,00 | | | | | | |
| | Milchsäure (80%) | 5,00 | | | | | | |
| 4 | VC-20HE | 0,5 | 0,42 | 315 | Gut | Gut | Gut | Sehr gut |
| | Vermiculit Pulver | 8,00 | | | | | | |
| | Oxalsäure | 4,00 | | | | | | |
| 5 | VC-20HE | 0,4 | 0,4 | 300 | Gut | Gut | Gut | Sehr gut |
| | Vermiculit Pulver | 8,00 | | | | | | |
| | Milchsäure (80%) | 5,00 | | | | | | |
| 6 | VC-20HE | 0,4 | 0,4 | 300 | Gut | Gut | Gut | Sehr gut |
| | Vermiculit Pulver | 8,00 | | | | | | |
| | Oxalsäure | 3,00 | | | | | | |
| 7 | VC-20HE | 0,4 | 0,4 | 300 | Gut | Gut | Gut | Sehr gut |
| | Vermiculit Pulver | 8,00 | | | | | | |
| | Oxalsäure | 4,00 | | | | | | |
| 8 | VC-20HE | 0,4 | 0,4 | 300 | Gut | Gut | Gut | Sehr gut |
| | Vermiculit Pulver | 8,00 | | | | | | |
| | Oxalsäure | 5,00 | | | | | | |
| 9 | VC-20HE | 0,5 | 0,42 | 315 | Gut(grob) | Gut | Gut | Gut |
| | Vermiculit Pulver | 8,00 | | | | | | |
| | Zitronensäure | 2,00 | | | | | | |
| 10 | VC-20HE | 0,50 | 0,42 | 315 | Gut(grob) | Gut | Gut | Gut |
| | Vermiculit Pulver | 8,00 | | | | | | |
| | Zitronensäure | 3,00 | | | | | | |
| 11 | VC-20HE | 0,50 | 0,42 | 315 | Gut | Gut | Gut | Gut |
| | Vermiculit Pulver | 8,00 | | | | | | |
| | Zitronensäure | 4,00 | | | | | | |
| 12 | VC-20HE | 0,5 | 0,42 | 315 | Gut | Gut | Gut | Gut |
| | Vermiculit Pulver | 8,00 | | | | | | |
| | Äpfelsäure | 4,00 | | | | | | |
| V1 | VC-20HE | 0,4 | 0,4 | 300 | Gut | Gut | Gut | Schlecht |
| | Vermiculit Pulver | 8,00 | | | | | | |
| V2 | VC-20HE | 0,5 | 0,4 | 300 | Gut | Gut | Gut | Gut |
| | SAP | 0,12 | | | | | | |
| | Al₂(SO₄)₃ × 14H₂O | 1,44 | | | | | | |
| V3 | VC-20HE | 0,4 | 0,4 | 300 | Gut | Gut(grob) | Gut | mittel |
| | Vermiculit Pulver | 8,00 | | | | | | |
| | Al₂(SO₄)₃ × 14H₂O | 1,44 | | | | | | |

Das resultierende Granulat wurde visuell auf dessen Rieselung und Trocknungszustand untersucht und es wurden die Rückstände im Mischgefäß beurteilt. Das Mörtelgranulat wurde anschließend auf einen Haufen geleert und 24 Stunden lang trocknen gelassen. Der ausgehärtete Mörtel wurde danach auf seine Kompaktheit (Kompaktheit nach 24 h) beurteilt. Für die Bewertung gilt Folgendes:
Trocknungszustand: Granulat, welches sich nicht kompaktieren lässt und nur noch erdfeucht ist, erhält die Bewertung "gut".

Rieselung: Keine groben Klumpen oder Verkleben untereinander ergibt die Bewertung "gut".

Reinigung: Das Mischgefäß entleert sich vollständig, ohne dass Mörtelrückstände, Zementleim etc. darin zurückbleibt.

Kompaktheit nach 24 h: Der Mörtelhaufen wurde auf dessen Verklebung unter den Partikeln beurteilt. Eine kompakte Masse, auf die zur nachträglichen Granulierung Kraft verwendet werden muss, wurde mit "schlecht" beurteilt. Wenn der getrocknete Mörtelhaufen von selber rieselt, wurde die Kompaktheit als "sehr gut" beurteilt. Eine "gut"-Beurteilung wurde vergeben, wenn die Masse in sich noch kompakt war, aber mit geringem Kraftaufwand zum Rieseln gebracht werden konnte.

Es zeigte sich, dass die erfindungsgemäßen Proben 1 bis 8 im Vergleich zur gemäß der WO 2012/084716 hergestellten Probe V2 in Bezug auf den Trocknungszustand, die Rieselung und Reinigung vergleichbare Ergebnisse liefern. Bei der Kompaktheit zeigte sich hingegen gegenüber der Probe V2 in allen Fällen eine Verbesserung. Die Zusammensetzung V1, die nur mit Vermiculit versetzt wurde, zeigte eine sehr ungünstige Kompaktheit, die auch durch den Zusatz von Aluminiumsulfat nicht signifikant verbessert werden konnte (Probe V3). Auch die Proben 9 bis 12 zeigen trotz nicht durchgeführter Optimierung ähnliche Kompaktheiten, wie die Vergleichsprobe V2.

### Beispiel 2

Um eine Wiederverwendung des gewonnenen Betongranulats zu ermöglichen, muss dieses gewisse strukturelle Eigenschaften aufweisen, die im Folgenden untersucht wurden. Dabei stellt die Probe 1 einen Beton ohne Recyclingmaterial dar, während bei den Proben 2, 3 und 4 etwa 50% eines Granulatmaterials mit einem Zusatz an 8% Vermitculitpulver und Milchsäure (5%), Oxalsäure (4%) bzw. Oxalsäure (3%) zugesetzt wurden. Bei diesen Untersuchungen zeigte sich eine nur geringfügig veränderte Härtungszeit der jeweiligen Zusammensetzungen. Zudem ergab sich durch die Betongranulate eine nur geringe Verschlechterung der nach einem Tag Aushärtung erzielbaren Druckfestigkeit. Die Ergebnisse dieser Untersuchungen sind in der folgenden Tabelle 2 dargestellt.

**Tabelle 2**

| Probe | Mischung | Dosierung rel. zu Bindemittel [%] | Verhältnis Wasser/Bindemittel | Luft Gehalt [%] | Druckfestigkeit [MPa] 1Tag | |
|---|---|---|---|---|---|---|
| | | | | | absolut | Δ |
| 1 | 100% Mix | 0,4 | 0,4 | 2,8 | 34,3 | |
| 2 | 50 % Granulat mit 5% Milchsäure | 0,4 | 0,54 | 3,3 | 26,7 | -22% |
| 3 | 50 % Granulat mit 4% Oxalsäure | 0,4 | 0,54 | 3,8 | 25,2 | -27% |
| 4 | 50 % Granulat mit 3% Oxalsäure | 0,4 | 0,4 | 4,0 | 26,8 | -22% |

## Patentansprüche

1. Verfahren zum Herstellen von Aggregaten aus frischen Zementzusammensetzungen, insbesondere in Form von Beton und Restbeton, umfassend die Zugabe a) eines wasserabsorbierenden Mittels und b) eines Kristallisationsinaktivierers zu einer nicht abgebundenen Zementzusammensetzung und Mischen bis sich ein granulares Material gebildet hat, **dadurch gekennzeichnet, dass** als Kristallisationsinaktivierer eine Carbonsäure mit einer Molmasse pro Säuregruppe von < 100 g/mol oder eine α-Hydroxycarbonsäure eingesetzt wird, mit der Maßgabe, dass im erfindungsgemäßen Verfahren keine Calciumaluminathydrate zugesetzt werden.

2. Verfahren nach Anspruch 1, **dadurch gekennzeichnet, dass** die Hydroxycarbonsäure in Form von Milchsäure, Zitronensäure oder Äpfelsäure und die Carbonsäure mit einer Molmasse pro Säuregruppe von < 100 g/mol in Form von Oxalsäure, Ameisensäure, oder Essigsäure vorliegt.

3. Verfahren nach einem der Ansprüche 1 oder 2, **dadurch**
**gekennzeichnet, dass** 1 bis 15 Gew.-%, bevorzugt 2 bis 10 Gew.-% und am meisten bevorzugt 3 bis 8 Gew.-% Kristallisationsinaktivierer, bezogen auf den Bindemittelgehalt in der Zementzusammensetzung, zugegeben werden.

4. Verfahren nach einem der Ansprüche 1 bis 3, **dadurch gekennzeichnet, dass** als wasserabsorbierendes Mittel ein Superabsorberpolymer oder ein Schichtsilikat, insbesondere in Form von Vermiculit, eingesetzt wird.

5. Verfahren nach Anspruch 4, **dadurch gekennzeichnet**, ein Superabsorberpolymer in einer Menge von 0,04 bis 2 Gew.-%, bevorzugt 0,08 bis 1,0 Gew.-% und am meisten bevorzugt 0,1 bis 0,5 Gew.-% zugegeben wird.

6. Verfahren nach Anspruch 4, **dadurch gekennzeichnet**, ein Schichtsilikat in einer Menge von 2 bis 20 Gew.-%, bevorzugt 4 bis 15 Gew.-% und am meisten bevorzugt 6 bis 10 Gew.-% zugegeben wird.

7. Verfahren nach einem der vorstehenden Ansprüche, **dadurch**
**gekennzeichnet, dass** der Zementzusammensetzung ein oder mehrere Additive zugesetzt werden, die aus der Gruppe umfassend Zement, Mittel für die Beschleunigung des Abbindens von Zement, Mittel für die Aktivierung der Bildung von Aluminathydraten, Verzögerungsmittel, Wasser-abdichtende und Wasser-abweisende Mittel, Verwitterungsinhibitoren, Schlacken, natürliche Puzzolane, Mikrosilika, Flugasche, Quarzsand, Calciumcarbonat, Pimente und Farbmittel, Ton, poröse Glashohlkugeln, Kunststoff und Kautschukmaterialien ausgewählt sind.

8. Verfahren nach einem der vorstehenden Ansprüche, **dadurch**
**gekennzeichnet, dass** der Zementzusammensetzung in einem ersten Schritt in einem Mischer ein wasserabsorbierendes Mittel zugegeben wird, das anschließend mit der Zementzusammensetzung vermischt wird bis sich ein Granulat gebildet hat, und in einem zweiten Schritt ein Kristallisationsinkativierer in die Mischung aus Zementzusammensetzung und wasserabsorbierendem Mittel zugegeben wird.

9. Verfahren nach Anspruch 8, **dadurch gekennzeichnet, dass** die
Zementzusammensetzung nach Einmischen des wasserabsorbierenden Mittels und des Kristallisationsinkativierers aus dem Mischer entleert und bis zum vollständigen Abbinden des Zements getrocknet wird.

## Claims

1. Method for producing aggregates from fresh cement compositions, particularly in the form of concrete and residual concrete, comprising the addition of a) a water-absorbing agent and b) a crystallization deactivator to a non-set cement composition and mixing until a granular material has formed, **characterized in that** a carboxylic acid having a molar mass < 100 g/mol per acid group or an α-hydroxycarboxylic acid is used as the crystallization deactivator, with the proviso that no calcium aluminate hydrates are added in the method of the invention.

2. Method according to Claim 1, **characterized in that** the hydroxycarboxylic acid is present in the form of lactic acid, citric acid or malic acid, and the carboxylic acid having a molar mass < 100 g/mol per acid group is present in the form of oxalic acid, formic acid, or acetic acid.

3. Method according to either of Claims 1 and 2, **characterized in that** 1 to 15% by weight, preferably 2 to 10% by weight and most preferably 3 to 8% by weight crystallization deactivator relative to the binder content in the cement composition is added.

4. Method according to any of Claims 1 to 3, **characterized in that** a superabsorbent polymer or a sheet silicate, particularly in the form of vermiculite, is used as the water-absorbing agent.

5. Method according to Claim 4, **characterized in that** a superabsorbent polymer is added in a quantity from 0.04 to 2% by weight, preferably 0.08 to 1.0% by weight and most preferably 0.1 to 0.5% by weight.

6. Method according to Claim 4, **characterized in that** a sheet silicate is added in a quantity from 2 to 20% by weight, preferably 4 to 15% by weight and most preferably 6 to 10% by weight.

7. Method according to any of the preceding claims, **characterized in that** one or more additives selected from the group comprising cement, cement setting accelerators, agents promoting the formation of aluminate hydrates, retarders, water insulating and water repelling agents, weathering inhibitors, slags, natural pozzolans, microsilica, fly ash, quartz sand, calcium carbonate, pigments and colourants, clay, porous hollow glass beads, plastic and rubber materials is/are added to the cement composition.

8. Method according to any of the preceding claims, **characterized in that** in a first step a water-absorbing agent is added to the cement composition in a mixer and is then mixed together with the cement composition until a granulate has formed, and in a second step a crystallization deactivator is added to the mixture of cement composition and water-absorbing agent.

9. Method according to Claim 8, **characterized in that** the cement composition is emptied out of the mixer after the water-absorbing agent and the crystallization deactivator have been mixed in, and is dried until the cement has completely set.

## Revendications

1. Procédé de fabrication de granulats à partir de compositions de ciment frais, en particulier sous forme de béton et de béton résiduel, comprenant l'addition a) d'un agent absorbant l'eau et b) d'un inactivateur de cristallisation à une composition de ciment n'ayant pas encore pris et le mélange jusqu'à formation d'un matériau granulaire, **caractérisé en ce qu'**on utilise comme activateur de cristallisation un acide carboxylique ayant une masse moléculaire par groupe acide < 100 g/mol ou un acide α-hydroxycarboxylique, à la condition qu'aucun hydrate d'aluminate de calcium ne soit ajouté dans le procédé selon l'invention.

2. Procédé selon la revendication 1, **caractérisé en ce que** l'acide hydroxycarboxylique se présente sous forme d'acide lactique, d'acide citrique ou d'acide malique, et l'acide carboxylique ayant une masse moléculaire par groupe acide < 100 g/mol sous forme d'acide oxalique, d'acide formique ou d'acide acétique.

3. Procédé selon l'une des revendications 1 ou 2, **caractérisé en ce qu'**on ajoute 1 à 15 % en poids, de préférence 2 à 10 % en poids et tout spécialement 3 à 8 % en poids d'inactivateurs de cristallisation, par rapport à la quantité de liant contenue dans la composition de ciment.

4. Procédé selon l'une des revendications 1 à 3, **caractérisé en ce qu'**on utilise comme agent absorbant l'eau un polymère superabsorbant ou un phyllosilicate, en particulier sous forme de vermiculite.

5. Procédé selon la revendication 4, **caractérisé en ce qu'**on ajoute un polymère superabsorbant en une quantité de 0,04 à 2 % en poids, de préférence de 0,08 à 1,0 % en poids et tout spécialement de 0,1 à 0,5 % en poids.

6. Procédé selon la revendication 4, **caractérisé en ce qu'**on ajoute un phyllosilicate en une quantité de 2 à 20 % en poids, de préférence de 4 à 15 % en poids et tout spécialement de 6 à 10 % en poids.

7. Procédé selon l'une des revendications précédentes, **caractérisé en ce qu'**on ajoute à la composition de ciment un ou plusieurs additifs qui sont choisis dans le groupe comprenant le ciment, les accélérateurs de prise du ciment, les agents d'activation de la formation d'hydrates d'aluminates, les retardateurs, les agents d'étanchéité à l'eau et les agents hydrofuges, les inhibiteurs d'altération, les laitiers, les pouzzolanes naturels, la microsilice, les cendres volantes, le sable quartzeux, le carbonate de calcium, les pigments et les colorants, l'argile, les billes creuses de verre poreuses, les plastiques et les matériaux caoutchouteux.

8. Procédé selon l'une des revendications précédentes, **caractérisé en ce qu'**on ajoute à la composition de ciment dans une première étape dans un malaxeur un agent absorbant l'eau, qui ensuite est mélangé à la composition de ciment jusqu'à formation d'un granulat et, dans une deuxième étape, on ajoute un inactivateur de cristallisation au mélange de la composition de ciment et de l'agent absorbant l'eau.

9. Procédé selon la revendication 8, **caractérisé en ce que** la composition de ciment est, après introduction par mélange de l'agent absorbant l'eau et de l'inactivateur de cristallisation, vidée du malaxeur, et séchée jusqu'à prise complète du ciment.
